# EUROPEAN PATENT APPLICATION

(11) **EP 4 052 894 A1**
(43) Date of publication of application: **07.09.2022**
(21) Application number: 20900982.8
(22) Date of filing: 03.12.2020
(51) Int. Cl.: B32B 5/00, B32B 5/08, B32B 27/34, C08G 69/26, C08J 5/04

(54) **FIBER-REINFORCED RESIN COMPOSITE SHEET, FIBER-REINFORCED RESIN COMPOSITE MATERIAL, AND MOLDED RESIN ARTICLE INCLUDING SAME**

(30) Priority: 17.12.2019 JP 2019227455
(71) Applicant: Fukuvi Chemical Industry Co., Ltd., Fukui-shi, Fukui 918-8585 (JP)
(72) Inventor: KANAMORI, Naoaki, Fukui-shi, Fukui 918-8585 (JP)
(74) Representative: Müller-Boré & Partner Patentanwälte PartG mbB
(86) International application number: PCT/JP2020/045029
(87) International publication number: WO 2021/124907

(57) **Abstract**

A fiber-reinforced resin composite sheet of the present invention contains: a polyamide resin film containing a dicarboxylic acid component (a) and a diamine component (b); and a plurality of reinforcing fibers laminated in a state of being oriented in the same direction on the polyamide resin film, the reinforcing fibers being obtained by opening a reinforcing fiber bundle. The dicarboxylic acid component (a) contains 60 mol% or more and 100 mol% or less of terephthalic acid. The diamine component (b) contains 60 mol% or more and 100 mol% or less of 1,9-nonanediamine and 2-methyl-1,8 octanediamine. The fiber-reinforced resin composite sheet has a volume content rate Vf of the reinforcing fibers of 20% or more and 70% or less and a thickness of 20 µm or more and 70 µm or less.

## Description

### Technical Field

The present invention relates to a fiber-reinforced resin composite sheet comprising a polyamide resin film and reinforcing fibers.

### Background Art

Fiber-reinforced resin composite materials are lightweight, have high strength, and have high rigidity, and thus are widely used in sporting and leisure applications and industrial applications such as automobiles and aircrafts. As a method for producing such a fiber-reinforced resin composite material, there is a method for using an intermediate material, that is a prepreg, obtained by impregnating a reinforcing material composed of long fibers (continuous fibers) such as reinforcing fibers into a matrix resin. This method has an advantage that the content of the reinforcing fibers in the resulting fiber-reinforced resin composite material is likely to be managed, and the content can be designed to be higher. By laminating a plurality of prepregs and heating and curing the laminated prepregs, a molded article of the fiber-reinforced resin composite material can be obtained.

Conventionally, in the production of a fiber-reinforced resin composite material, a thermosetting resin has been often used as a matrix resin from the viewpoint of excellent strength and rigidity (see, for example, Patent Document 1). However, the prepreg using the thermosetting resin has problems that impact resistance is low and secondary processability and mass productivity are difficult. Therefore, in recent years, a prepreg in which reinforcing fibers are impregnated into a thermoplastic resin as a matrix resin has been widely developed. Since such a prepreg is easily melted by heating and solidified by cooling, the prepreg has excellent operability during molding processing of a fiber-reinforced resin composite material, and an effect such as reduction in a production time is also expected, leading to cost reduction.

### Citation List

### Patent Literature

Patent Literature 1: Japanese Unexamined Patent Application Publication No. HEI 08-118381

### Summary of Invention

When a fiber-reinforced resin composite material is molded using a thermoplastic resin as a matrix resin, a polyamide resin may be used as the thermoplastic resin from the viewpoint of excellent physical properties such as impact resistance, toughness, and flexibility. When the polyamide resin is used, generally, polyamide 6 (polycaproamide) is often used. This is because polyamide 6 is inexpensive and available in large quantities, is likely to maintain strength in a wide temperature range, has excellent impregnation properties with reinforcing fibers, is compatible with a sizing agent, and has also excellent handling.

However, since polyamide 6 cannot be said to have sufficiently low water absorbability, the absorption of moisture may affect the physical property value of the fiber-reinforced resin composite material. Specifically, the absorption of moisture may cause a decrease in physical property values such as strength of the fiber-reinforced resin composite material and a dimensional change. Therefore, polyamide 6 may be unsuitable for application to, for example, a molded article that may be wetted with water or infiltrated into water, or a molded article to be used under a surrounding environment having rainwater or much moisture, or the like. In the present specification, the dimensional change is a concept including also the meaning of a mass change.

Meanwhile, when attention is paid only to water absorbency, polyamide 12 (polydodecanamide) among the polyamide resins has remarkably low water absorbency. However, polyamide 12 has a low glass transition temperature Tg and a low melting point Tm in its physical property values. Therefore, it is assumed that a fiber-reinforced resin composite material having sufficient strength cannot be produced. As described above, when the fiber-reinforced resin composite sheet to be an intermediate material of the fiber-reinforced resin composite material has low water absorbency, does not cause a dimensional change due to water absorption, and has sufficient strength, the fiber-reinforced resin composite material and a molded resin article as a final molded article can be used in a wider range of applications and under a surrounding environment and the like, which is preferable.

Therefore, an object of the present invention is to provide a fiber-reinforced resin composite sheet having low water absorbency and excellent strength.

Therefore, as a result of intensive studies to solve the above problems, the present inventors have reached the present invention.

That is, a fiber-reinforced resin composite sheet according to an aspect of the present invention comprises: a polyamide resin film containing a dicarboxylic acid component (a) and a diamine component (b); and a plurality of reinforcing fibers laminated in a state of being oriented in a same direction on the polyamide resin film, the reinforcing fibers being obtained by opening a reinforcing fiber bundle, wherein the dicarboxylic acid component (a) contains 60 mol% or more and 100 mol% or less of terephthalic acid; the diamine component (b) contains 60 mol% or more and 100 mol% or less of 1,9-nonanediamine and 2-methyl-1,8 octanediamine; and the fiber-reinforced resin composite sheet has a volume content rate Vf of the reinforcing fibers of 20% or more and 70% or less and a thickness of 20 µm or more and 70 µm or less.

According to the present invention, the fiber-reinforced resin composite sheet having low water absorbency and excellent strength can be provided. In other words, the fiber-reinforced resin composite sheet according to the present invention not only has excellent strength but also has no change in physical properties such as strength due to a dimensional change caused by water absorption. Therefore, the fiber-reinforced resin composite sheet is suitably used as a material for producing, for example, a molded article that may be wetted with water or infiltrated into water, or a molded article to be used under a surrounding environment having rainwater or much moisture, or the like.

### Brief Description of Drawings

FIG. 1 is a view showing an example of the schematic configuration of a production device for producing a fiber-reinforced resin composite sheet in the present embodiment.
FIG. 2 is a view showing an example of a method for cutting out a chopped material from the fiber-reinforced resin composite sheet in the present embodiment.
FIG. 3 is a view for illustrating a method for producing a laminated chopped sheet as an example of a fiber-reinforced resin composite material in the present embodiment.
FIG. 4 is a cross-sectional view of the laminated chopped sheet as the example of the fiber-reinforced resin composite material in the present embodiment.

### Description of Embodiments

Hereinafter, embodiments of the present invention will be described in detail. The scope of the present invention is not limited to the embodiments described here, and various changes will be possible without departing from the spirit of the invention.

### <Fiber-Reinforced Resin Composite Sheet>

A fiber-reinforced resin composite sheet in the present embodiment comprises a polyamide resin film and a plurality of reinforcing fibers laminated on the polyamide resin film. The plurality of reinforcing fibers are laminated in a state of being oriented in the same direction on the polyamide resin film, the reinforcing fibers being obtained by opening a reinforcing fiber bundle.

Here, the term "laminated" used in the phrase "laminated on a polyamide resin film" in the entire present specification also includes the meanings of "laminated in a state of being fused in at least a part", "laminated in a state of being adhered in at least a part", and "laminated in a state of being pressure-bonded in at least a part", depending on the physical property value and shape of the polyamide resin film, and the type and condition of treatment performed for laminating the polyamide resin film, and the like. More specifically, heating, cooling, and/or pressurization treatment may be performed as necessary at the time of "laminating".

First, constituents contained in the fiber-reinforced resin composite sheet in the present embodiment will be described.

### [Polyamide Resin Film]

Specifically, the polyamide resin film can be obtained by forming a polyamide resin composed of a dicarboxylic acid component (a) and a diamine component (b) into a film. As necessary, the polyamide resin film may contain other thermoplastic resins and other additives and the like in addition to the polyamide resin composed of the dicarboxylic acid component (a) and the diamine component (b). Hereinafter, components contained in the polyamide resin film will be described.

### (Polyamide Resin)

### -Dicarboxylic Acid Component (a)

In the present embodiment, in the polyamide resin, the dicarboxylic acid component (a) contains 60 mol% or more and 100 mol% or less of terephthalic acid. This is because when the content of the terephthalic acid in the dicarboxylic acid component (a) is less than 60 mol%, physical properties such as heat resistance and chemical resistance of the resulting polyamide resin are deteriorated. The terephthalic acid accounts for preferably 75 mol% or more, more preferably 80 mol% or more, still more preferably 85 mol% or more, and yet still more preferably 90 mol% or more, 95 mol% or more, 99 mol% or more, 99.9 mol% or more, or 100 mol% in the dicarboxylic acid component (a).

The other dicarboxylic acid component (a) other than terephthalic acid is not particularly limited, and examples thereof include aliphatic dicarboxylic acids (malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid, and suberic acid and the like), an alicyclic dicarboxylic acid (1,3-cyclopentanedicarboxylic acid and 1,4-cyclohexanedicarboxylic acid and the like), aromatic dicarboxylic acids (isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, difenic acid, dibenzoic acid, 4,4'-oxydibenzoic acid, diphenylmethane-4,4'-dicarboxylic acid, diphenylsulfone-4,4'-dicarboxylic acid, and 4,4'-biphenyldicarboxylic acid and the like), and any mixtures thereof. The other dicarboxylic acid component (a) other than terephthalic acid can also be used within a range in which the effects of having low water absorbency and excellent strength of the fiber-reinforced resin composite sheet in the present embodiment are not impaired when the fiber-reinforced resin composite sheet is produced.

### -Diamine Component (b)

In the present embodiment, in the polyamide resin, the diamine component (b) contains 60 mol% or more and 100 mol% or less of 1,9-nonanediamine and 2-methyl-1,8 octanediamine. When the diamine component (b) contains 60 mol% or more of 1,9-nonanediamine and 2-methyl-1,8 octanediamine, a polyamide resin excellent in low water absorbency, high heat resistance, and impact resistance and having a wide moldable temperature range can be obtained. 1,9-nonanediamine and 2-methyl-1,8 octanediamine account for preferably 75 mol% or more, more preferably 80 mol% or more, still more preferably 85 mol% or more, and yet still more preferably 90 mol% or more, 95 mol% or more, 99 mol% or more, 99.9 mol% or more, or 100 mol% of the total amount of the diamine component (b).

The diamine component (b) may contain any of 1,9-nonanediamine and 2-methyl-1,8 octanediamine may be contained. In this case, it is preferable to contain 1,9-nonanediamine because it hardly affects the physical properties of low water absorbency of the resulting polyamide resin. When the diamine component (b) contains both 1,9-nonanediamine and 2-methyl-1,8 octanediamine, the molar ratio of 1,9-nonanediamine and 2-methyl-1,8-octanediamine is preferably 60:40 to 99: 1, more preferably 70:30 to 95:5, and still more preferably 80:20 to 95:5. As described above, when the diamine component (b) contains 1,9-nonanediamine in a relatively higher molar ratio than that of 2-methyl-1,8-octanediamine, a polyamide resin having a wide moldable temperature range, remarkably excellent molding processability, and excellent impact resistance can be obtained.

The other diamine component (b) other than 1,9-nonanediamine and 2-methyl-1,8-octanediamine is not particularly limited, and examples thereof include aliphatic diamines (ethylenediamine, propylenediamine, 1,4-butanediamine, 1,6-hexanediamine, 1,8-octanediamine, 1,10-decanediamine, 1,12-dodecanediamine, 3-methyl-1,5-pentanediamine, 2,2,4-trimethyl-1,6-hexanediamine, 2,4,4-trimethyl-1,6-hexanediamine, and 5-methyl-1,9-nonanediamine and the like), alicyclic diamines (cyclohexanediamine, methylcyclohexanediamine, and isophoronediamine and the like), aromatic diamines (p-phenylenediamine, m-phenylenediamine, xylenediamine, 4,4'-diaminodiphenylmethane, 4,4'-diaminodiphenylsulfone, and 4,4'-diaminodiphenyl ether and the like), and any mixtures thereof. The other diamine component (b) other than 1,9-nonanediamine and 2-methyl-1,8-octanediamine can also be used as long as the effects of having low water absorbency and excellent strength of the present invention are not impaired when the fiber-reinforced resin composite sheet is produced.

In the polyamide resin, the molar amount of the whole diamine component (b) is preferably 0.9 or more and 1.2 or less, more preferably 0.95 or more and 1.1 or less, and still more preferably 0.98 or more and 1.05 or less, based on 1 of the molar amount of the whole dicarboxylic acid component (a).

The polyamide resin composed of these components can be produced using any method known to those skilled in the art as a method for producing a polyamide resin. Examples thereof include (i) a thermal melt polycondensation method in which a mixture of a dicarboxylic acid component (a) and a diamine component (b), or the like is heated and polymerized while the molten state is maintained, (ii) a thermal melt polymerization-solid phase polymerization method in which the degree of polymerization of a polyamide resin obtained by the thermal melt polycondensation method is increased while the solid state of the polyamide resin is maintained at a temperature equal to or lower than the melting point, and (iii) a solid phase polymerization method in which a mixture of a dicarboxylic acid component (a) and a diamine component (b) is polymerized while the solid state of the mixture is maintained.

Preferably, the ends of the resulting polyamide resin are sealed with any end-capping agent known to those skilled in the art. The end-capping agent is not particularly limited, and examples thereof include monocarboxylic acids, monoamines, acid anhydrides, monoisocyanates, monoacid halides, monoesters, and monoalcohols. These end-capping agents can be used singly or in combination of two or more thereof as appropriate. The polyamide resin end-capped with the end-capping agent tends to be more excellent in heat resistance, fluidity, toughness, low water absorbency, and rigidity.

When the monomer unit contained in the polyamide resin to be formed into a film is configured as described above, the resulting polyamide resin film and the fiber-reinforced resin composite sheet produced using the polyamide resin film in the present embodiment have physical properties such as low water absorbency and high heat resistance.

Specifically, a representative example of the polyamide resin as described above is polyamide 9T (polynonamethylene terephthalamide). Table 1 below shows, as reference, approximate physical property values of polyamide 9T as compared with polyamide 6 and polyamide 12. Water absorption ratios (%) in the following Table 1 are measured values under the conditions of 23°C, relative humidity (RH) of 100%, and 24 hours (for polyamide 6 and polyamide 12, refer to page 174 of "Revised New Edition of Engineering Polymer" (Chemical Daily Co., Ltd.), and for polyamide 9T, refer to basic physical property values of PA9T of "Genestar" (registered trademark) manufactured by Kuraray Co., Ltd.).

**[Table 1]**

| Type of polyamide resin | Polyamide 9T | Polyamide 6 | Polyamide 12 |
|---|---|---|---|
| Glass transition temperature Tg (°C) | 125 | 40 to 50 | 37 |
| Melting point Tm (°C) | 250 to 320 | 225 | 178 |
| Water absorption rate (%) | 0.25 | 1.8 | 0.2 |

As can be seen from Table 1, the water absorption rate of polyamide 9T⁻ is remarkably lower than that of polyamide 6, and is about 1/7. Furthermore, polyamide 9T has a higher glass transition temperature Tg and a higher melting point Tm than those of polyamide 6 and polyamide 12. Therefore, when polyamide 9T is applied to a fiber-reinforced resin composite sheet, and a fiber-reinforced resin composite material and a molded resin article using the fiber-reinforced resin composite sheet, low water absorbency and high heat resistance are particularly expected. Examples of a commercially available product of such polyamide 9T include "Genestar" (registered trademark) (manufactured by Kuraray Co., Ltd.) (Grade: N1000A, N1001A, N1002A, N1006A, N1006D, and N1001D and the like) having a melting point Tm (°C) of 250°C to 320°C.

### (Other Thermoplastic Resins)

As necessary, the polyamide resin film may contain other thermoplastic resins other than the polyamide resin composed of the dicarboxylic acid component (a) and the diamine component (b). This is because resin flow control is improved when the reinforcing fibers are laminated on the polyamide resin film and/or an additional function such as toughness is imparted to the fiber-reinforced resin composite sheet.

Such other thermoplastic resins are not particularly limited, and examples thereof include polyesters, polyamides which do not correspond to the above-described polyamide resins, polycarbonate, polyethersulfone, polyphenylene ether, polyphenylene sulfide, polyetheretherketone, polyetherketone, polyimide, polytetrafluoroethylene, polyether, polyolefin, liquid crystal polymers, polyarylate, polysulfone, polyacrylonitrile styrene, polystyrene, polyacrylonitrile, polymethyl methacrylate, ABS, AES, ASA, polyvinyl chloride, polyvinyl formal resins, and block polymers. These thermoplastic resins can be used singly or in combination of two or more thereof as appropriate.

When the polyamide resin film also contains such other thermoplastic resins, the content thereof is preferably 20 parts by mass or less, more preferably 15 parts by mass or less, still more preferably 10 parts by mass or less, and yet still more preferably 5 parts by mass or less with respect to 100 parts by mass of the polyamide resin described above. When the content of the other thermoplastic resins other than the polyamide resin is 20 parts by mass or less, an additional function can be easily imparted while the effects of low water absorbency and impact resistance of the polyamide resin film are also maintained.

### (Other Additives)

The polyamide resin film may contain various known additives as necessary as long as the effects of the present invention are not impaired. For example, in order to improve the storage stability of the polyamide resin film and to avoid the discoloration or transformation of a cured product, an antioxidant, a light stabilizer, and a weather resistance improver and the like can be added.

Furthermore, examples thereof include thermosetting elastomers, thermoplastic elastomers, flame retardants (for example, phosphorus-containing polyamide resins, red phosphorus, phosphazene compounds, phosphates, and phosphate esters and the like), silicone oils, wet dispersants, antifoaming agents, defoamers, natural waxes, synthetic waxes, metal salts of linear fatty acids, acid amides, esters, and release agents such as paraffins, powders, metal oxides, and metal hydroxides such as crystalline silica, fused silica, calcium silicate, alumina, calcium carbonate, talc, and barium sulfate, inorganic fillers such as glass fibers, carbon nanotubes, and fullerenes, carbon fibers, organic fillers such as cellulose nanofibers, colorants such as red iron oxide, silane coupling agents, conductive materials, slipping agents, leveling agents, polymerization inhibitors such as hydroquinone monomethyl ether, and ultraviolet absorbers. These additives can be used singly or in combination of two or more kinds thereof as appropriate.

The polyamide resin film containing the components as described above can be produced by applying any method known to those skilled in the art. The method for producing the film is not particularly limited, and examples thereof include roll coating, reverse coating, comma coating, knife coating, die coating, gravure coating, a melt extrusion molding method, a solution casting method, a T-die method, and a calendering method. By using a co-extrusion method or a lamination method, a polyamide resin film having an increased thickness can be produced, or a polyamide resin film in which resin films having different resin compositions are laminated can be produced.

The lower limit of the thickness of the polyamide resin film is not particularly limited, but when the thickness is preferably 5 µm or more, the form of the film is likely to be satisfactorily maintained during film molding. The thickness of the polyamide resin film is preferably 50 µm or less, more preferably 45 µm or less, still more preferably 40 µm or less, and yet still more preferably 30 µm or less. By setting the thickness of the polyamide resin film to 50 µm or less, the fiber-reinforced resin composite sheet in the present embodiment in which the plurality of opened reinforcing fibers are laminated on the polyamide resin film can be made thinner.

Such a polyamide resin film is an intermediate material for producing the fiber-reinforced resin composite sheet in the present embodiment. The plurality of reinforcing fibers obtained by opening the reinforcing fiber bundle are laminated on one or both surfaces of the polyamide resin film in a state of being oriented in the same direction, and subjected to heating, cooling, and/or pressure treatment, thereby obtaining the fiber-reinforced resin composite sheet in the present embodiment.

### [Reinforcing Fiber]

The plurality of reinforcing fibers obtained by opening the reinforcing fiber bundle are laminated in a state of being oriented in the same direction on the polyamide resin film. In the present specification, the "state where a plurality of reinforcing fibers are oriented in the same direction" means a state where each of the plurality of reinforcing fibers extends in a substantially parallel direction.

The material of the reinforcing fiber is not particularly limited, but may be appropriately selected from those known as reinforcing fibers constituting the fiber-reinforced resin composite sheet according to the application and the like. As specific examples, various inorganic fibers or organic fibers such as carbon fibers, aramid fibers, nylon fibers, high-strength polyester fibers, glass fibers, boron fibers, alumina fibers, silicon nitride fibers, and basalt fibers can be used. Among them, carbon fibers, aramid fibers, glass fibers, boron fibers, alumina fibers, and silicon nitride fibers are preferable from the viewpoint of specific strength and specific elasticity. Furthermore, because the strength and corrosion resistance and the like of a molded article using the fiber-reinforced resin composite sheet in the present embodiment can be improved, carbon fibers are more preferable. As the carbon fibers, it is preferable to use PAN (polyacrylonitrile)-based carbon fibers having particularly high strength. When the carbon fibers are used as the reinforcing fibers, the carbon fibers may be subjected to surface treatment with a metal. The reinforcing fibers obtained by opening the reinforcing fiber bundle can be used singly or in combination of two or more kinds thereof as long as the reinforcing fibers are oriented in the same direction.

In the fiber-reinforced resin composite sheet in the present embodiment, the volume content rate Vf of the reinforcing fibers in the fiber-reinforced resin composite sheet is 20% or more and 70% or less. By setting the volume content rate Vf of the reinforcing fibers within such a range, the fiber-reinforced resin composite sheet is sufficiently reinforced by the reinforcing fibers, whereby the fiber-reinforced resin composite sheet has excellent strength. The volume content rate Vf of the reinforcing fibers is preferably 25% or more, more preferably 30% or more, still more preferably 40% or more, and still more preferably 45% or more. The volume content rate Vf of the reinforcing fibers is preferably 65% or less, more preferably 60% or less, and still more preferably 55% or less. The volume content rate Vf of the reinforcing fibers in the fiber-reinforced resin composite sheet can be adjusted to fall within the above range by appropriately controlling not only the type and thickness of the reinforcing fibers, a fiber width in which the reinforcing fibers are oriented, and the thickness of the polyamide resin film, and the like, but also a temperature and pressure and the like applied during the production of the fiber-reinforced resin composite sheet. The volume content rate Vf of the reinforcing fibers can be measured by a combustion method, a nitric acid decomposition method, and a sulfuric acid decomposition method and the like, and the volume content rate Vf of the reinforcing fibers in the present specification is a value measured by the same combustion method as that in Examples.

Furthermore, the thickness of the fiber-reinforced resin composite sheet in the present embodiment is 20 µm or more and 70 µm or less. The thickness of the fiber-reinforced resin composite sheet is preferably 25 µm or more, more preferably 30 µm or more, still more preferably 35 µm or more, and yet still more preferably 40 µm or more. The thickness of the fiber-reinforced resin composite sheet is preferably 65 µm or less, more preferably 60 µm or less, and still more preferably 55 µm or less. Specifically, by making the thickness of the fiber-reinforced resin composite sheet as thin as possible within the above range, the polyamide resin and the reinforcing fibers are laminated after being mostly fused, so that the strength of the reinforcing fibers can be sufficiently exhibited. Further, when stress is applied, the delamination of a laminated body (a fiber-reinforced resin composite material described later) formed of the fiber-reinforced composite sheet is less likely to occur, whereby the laminated body has excellent fatigue characteristics. Furthermore, in the case of using the fiber-reinforced resin composite sheet, molding processability is more excellent. The thickness of the fiber-reinforced resin composite sheet is also affected by the thickness of the polyamide resin film, but the thickness of the fiber-reinforced resin composite sheet can be set within the above range by appropriately controlling a temperature and pressure and the like applied at the time of producing the fiber-reinforced resin composite sheet.

As described above, the fiber-reinforced resin composite sheet in the present embodiment not only has physical properties of low water absorbency and high heat resistance, but also has an excellent reinforcing effect and fatigue resistance due to the volume content rate Vf of the reinforcing fibers occupying a sufficient value, and excellent molding processability due to the relatively small thickness of the fiber-reinforced resin composite sheet. That is, the fiber-reinforced resin composite sheet in the present embodiment has low water absorbency, whereby the fiber-reinforced resin composite sheet is suitably used as a material for producing, for example, a molded resin article that may be wetted with water or infiltrated into water, or a molded resin article to be used under a surrounding environment having rainwater or much moisture, or the like. Furthermore, it is possible to laminate the plurality of fiber-reinforced resin composite sheets in the present embodiment while reducing voids as much as possible to mold various shapes at a high density, whereby a fiber-reinforced resin composite material and a molded resin article having excellent strength can be produced.

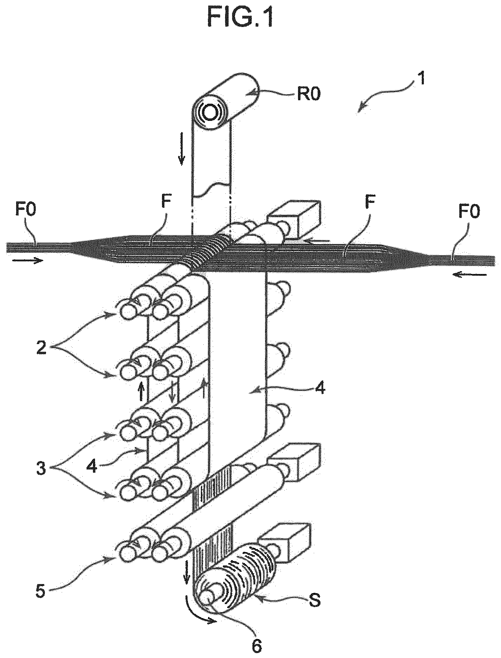

An example of a method for producing a fiber-reinforced resin composite sheet in the present embodiment will be described with reference to FIG. 1. FIG. 1 represents a fiber-reinforced resin composite sheet production device 1, a reinforcing fiber bundle F0, a reinforcing fiber (reinforcing fiber obtained by opening (the reinforcing fiber bundle)) F, a polyamide resin film R0, a heating roller 2, a cooling roller 3, an endless belt 4, a draw-out roller 5, a bobbin 6, and a fiber-reinforced resin composite sheet S.

The fiber-reinforced resin composite sheet S can be continuously produced using, for example, the fiber-reinforced resin composite sheet production device 1 shown in FIG. 1. The fiber-reinforced resin composite sheet production device 1 is a device for continuously producing the fiber-reinforced resin composite sheet S from the reinforcing fiber bundle F0 and the polyamide resin film R0.

Specifically, the fiber-reinforced resin composite sheet production device 1 includes a plurality of pairs (two pairs in FIG. 1) of heating rollers 2 vertically arranged, a plurality of pairs (two pairs in FIG. 1) of cooling rollers 3 vertically arranged below the heating rollers 2, a pair of endless belts 4 wound around the heating rollers 2 and the cooling rollers 3, a pair of draw-out rollers 5 located below the endless belts 4, and a winding bobbin 6 arranged below the draw-out rollers 5.

Although not illustrated, an opening mechanism of opening and expanding the reinforcing fiber bundle F0 in a band shape is provided in the vicinity of the heating roller 2 at the uppermost stage. This opening mechanism continuously opens the reinforcing fiber bundle F0, whereby a large number of continuous reinforcing fibers F can be formed while being spread so as to be oriented and extended in the same direction. The opening mechanism may be any mechanism allowing such treatment, and various mechanisms such as a mechanism of tapping and spreading the reinforcing fiber bundle F0, a mechanism of blowing and spreading the reinforcing fiber bundle F0, and a mechanism of applying ultrasonic waves to the reinforcing fiber bundle F0 and spreading it can be used.

In the example of FIG. 1, the opening mechanism includes a mechanism of supplying the opened reinforcing fibers F to one surface of the polyamide resin film R0 and a mechanism for supplying the opened reinforcing fibers F to the other surface of the polyamide resin film R0. The former mechanism is provided so as to introduce the reinforcing fibers F between one surface of the polyamide resin film R0 and the heating roller 2 in contact with the surface, and the latter mechanism is provided so as to introduce the reinforcing fibers F between the other surface of the polyamide resin film R0 and the heating roller 2 in contact with the surface. However, the opening mechanism may supply the reinforcing fibers F only to one surface of the polyamide resin film R0.

The heating roller 2 is a high-temperature roller heated by an electric heater or a heating medium, or the like (for example, a heating fluid). The two pairs of heating rollers 2 heat the polyamide resin film R0 and the reinforcing fibers F introduced onto both surfaces of the polyamide resin film R0 while sandwiching the polyamide resin film R0 and the reinforcing fibers F from both sides with the endless belt 4 sandwiched therebetween, thereby continuously laminating the reinforcing fibers F on the polyamide resin film R0. The reinforcing fibers F are laminated on the polyamide resin film R0 in a state of being oriented in the same direction (in a state of being aligned in a vertical direction in FIG. 1).

The cooling roller 3 is a low-temperature roller cooled by a cooling medium or the like (for example, a cooling fluid). The cooling roller 3 cools the polyamide resin film R0 with the reinforcing fibers F laminated thereon while sandwiching the polyamide resin film R0 from both sides with the endless belt 4 sandwiched therebetween, thereby fixing the reinforcing fibers F to the polyamide resin film R0. Thus, the fiber-reinforced resin composite sheet S in which the polyamide resin film R0 (matrix resin) and the reinforcing fibers F are integrated is molded.

The draw-out roller 5 is a roller that draws out the molded fiber-reinforced resin composite sheet S downward while applying tension to the fiber-reinforced resin composite sheet S.

The winding bobbin 6 is a core material for winding the fiber-reinforced resin composite sheet S. The bobbin 6 is rotatably driven by a drive source such as a motor, and sequentially winds the fiber-reinforced resin composite sheet S drawn out by the draw-out roller 5 to form the roll-shaped fiber-reinforced resin composite sheet S.

The fiber-reinforced resin composite sheet S can also be produced by a method in which the polyamide resin film R0 and the opened reinforcing fibers are caused to flow together in the same direction without using the endless belt 4 shown in FIG. 1 and are wound.

When reinforcing fibers are laminated on one surface of the polyamide resin film R0 in a state where the opened reinforcing fibers are oriented in the same direction, the reinforcing fibers F shown in FIG. 1 are fed from one side without being fed from both sides to obtain the fiber-reinforced resin composite sheet S in which the reinforcing fibers F are laminated on one surface of the polyamide resin film.

### <Fiber-Reinforced Resin Composite Material>

The fiber-reinforced resin composite material in the present embodiment is a fiber-reinforced composite material in which a plurality of fiber-reinforced resin composite sheets in the above-described embodiment are laminated in a thickness direction.

Here, the term "laminated" used in "the fiber-reinforced resin composite sheet (or the chopped material thereof) is laminated" in the entire present specification also includes the meanings of "laminated after fixed in at least a part", "laminated after bonded in at least a part", "laminated after fused in at least a part", "laminated after adhered in at least a part", and "laminated after pressure-bonded in at least a part" depending on the physical property value, shape, type of treatment performed for lamination, and conditions thereof and the like of the fiber-reinforced resin composite sheet (or the chopped material thereof). More specifically, heating, cooling, and/or pressurization treatment may be performed as necessary at the time of "laminating".

The fiber-reinforced resin composite sheets to be laminated may be chopped or the like as necessary according to a desired shape of the fiber-reinforced resin composite material, and laminated. The number of the fiber-reinforced resin composite sheets laminated is also not particularly limited, and may be appropriately set according to the desired size of the fiber-reinforced resin composite material or the like. The fiber-reinforced resin composite sheet may be laminated in any state in the fiber direction of the reinforcing fibers, but is preferably laminated in a state where the fiber directions of the reinforcing fibers of the plurality of fiber-reinforced resin composite sheets have an angular difference in a two-dimensional direction.

Examples thereof include a fiber-reinforced composite material in which two or more, preferably 4 × n (n is an integer of 1 or more) fiber-reinforced resin composite sheets are laminated in a thickness direction such that the fiber directions of reinforcing fibers have an angular difference of about 45° in a two-dimensional direction, in other words, a four-axis direction (hereinafter, also referred to as "four-axis direction with an angle difference of 45°") of 0°, 45°, -45° and 90° in a two-dimensional plane. By laminating the fiber-reinforced resin composite sheets in this manner, the tensile strength and flexural strength of each of the fiber-reinforced resin composite sheets along the fiber directions of the reinforcing fibers can be improved, whereby the overall strength of the fiber-reinforced resin composite material can be effectively improved.

Alternatively, in another fiber-reinforced resin composite material in the present embodiment, the fiber-reinforced resin composite sheets in the above-described embodiment may be laminated in the thickness direction in the shapes of a plurality of chopped materials.

A plurality of chopped materials can be produced, for example, by chopping the fiber-reinforced resin composite sheet S shown in FIG. 1 in the above-described embodiment in a longitudinal direction and a width direction.

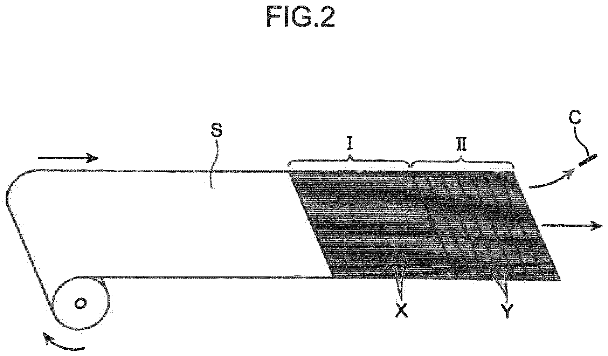

As a specific example, as shown in FIG. 2, the chopped material can be produced by the following procedure. FIG. 2 represents a fiber-reinforced resin composite sheet S, a section I, a cut X continuous in a longitudinal direction, a section II, a cut Y continuous from one end to the other end in a width direction, and a chopped material C. First, as shown in FIG. 2, the cut X extending in the longitudinal direction is formed. That is, while the fiber-reinforced resin composite sheet S is fed in the longitudinal direction, a large number of cuts X continuous in the longitudinal direction are formed in the section I in the middle of the feeding path. The cuts X can be formed using, for example, a chopping device including a large number of blades arranged at equal intervals in the width direction of the fiber-reinforced resin composite sheet S.

Subsequently, in the subsequent section II, cuts Y continuous from one end to the other end in the width direction of the fiber-reinforced resin composite sheet S are formed. The cuts Y can be formed using, for example, a rotary cutter or the like. The cuts Y are formed every time the fiber-reinforced resin composite sheet S is fed by a certain distance in the longitudinal direction. As a result, a large number of rectangular chopped materials C having a short side having a length corresponding to the pitch of the cuts X and a long side having a length corresponding to the pitch of the cuts Y are cut out.

As described above, the fiber-reinforced resin composite sheet S is a sheet in which a large number of reinforcing fibers F are laminated in a state of being oriented in the same direction in the longitudinal direction thereof. Therefore, in each of the chopped materials C cut out from the fiber-reinforced resin composite sheet S, a large number of reinforcing fibers F are also laminated in a state of being oriented in the same direction in the longitudinal direction (long side direction) thereof. That is, the chopped material C includes a polyamide resin film R0 and a large number of reinforcing fibers F laminated on the polyamide resin film R0 in a state of being oriented in the same direction.

The chopped material C can be appropriately determined to have a suitable size in consideration of the shapability and the like of the fiber-reinforced resin composite material and the molded resin article produced using the chopped material C. Specifically, preferably, the chopped material C is formed in a rectangular shape with a short side length of 2 mm or more and 50 mm or less and a long side length of 2 mm or more and 80 mm or less. By reducing the lengths of the short and long sides of the chopped material C, the density of the chopped material C in the fiber-reinforced resin composite material and the molded resin article produced using the chopped material C can be made higher. Therefore, when the fiber-reinforced resin composite material and the molded resin article produced using the chopped material C are not required to be mass-produced in an extremely large size or in a short time, the strengths of the fiber-reinforced resin composite material and the molded resin article can be more effectively enhanced by reducing the lengths of the short and long sides of the chopped material C. Meanwhile, in the case of producing a molded resin article having an extremely large size, by increasing the lengths of the short and long sides of the chopped material C to such an extent that the strength is not extremely impaired, the fiber-reinforced resin composite material and the molded resin article can be more efficiently produced in a short time. The length of the short side of the chopped material C is preferably 2 mm or more, more preferably 3 mm or more, still more preferably 4 mm or more, yet still more preferably 4.5 mm or more, and is preferably 50 mm or less, more preferably 40 mm or less, still more preferably 30 mm or less, yet still more preferably 20 mm or less, and further preferably 15 mm or less or 10 mm or less. The length of the long side of the chopped material C is preferably 2 mm or more, more preferably 4 mm or more, still more preferably 6 mm or more, and yet still more preferably 8 mm or more or 10 mm or more, and is preferably 80 mm or less, more preferably 70 mm or less, still more preferably 60 mm or less, and yet still more preferably 50 mm or less or 45 mm or less.

The thickness of the chopped material C is the same as the thickness of the fiber-reinforced resin composite sheet in the above-described embodiment, and is 20 µm or more and 70 µm or less. The preferable thickness is also the same as the thickness of the fiber-reinforced resin composite sheet in the above-described embodiment. That is, similarly to the fiber-reinforced resin composite sheet in the above-described embodiment, the plurality of the chopped materials C can be laminated in a small size while the number of voids is reduced as much as possible because of the thinness. Therefore, it is possible to produce a fiber-reinforced resin composite material having a higher density and remarkably excellent strength and low water absorbency, and a molded resin article using the fiber-reinforced resin composite material. Furthermore, by the shape of the chopped material C, the shapability is improved, whereby a molded resin article having a complicated shape can also be produced.

In the fiber-reinforced composite material in the present embodiment, the plurality of chopped materials C may be laminated in a state where the fiber directions of the reinforcing fibers are any directions, but are preferably laminated in a state where the fiber directions of the reinforcing fibers of the chopped materials C are two-dimensionally random (quasi-isotropic).

An example of a method for producing such a fiber-reinforced composite material will be described. First, a large number of chopped materials C are arranged while being dispersed on the upper surface of a belt conveyor which is substantially horizontally arranged and rotates. For the dispersion arrangement of the chopped material C, for example, a dropping device that drops the chopped material C from above the belt conveyor while vibrating the chopped material C can be used. By repeating the dropping operation of the chopped material C using such a dropping device, the density of the chopped materials C and the number of the laminated chopped materials C on the upper surface of the belt conveyor are increased. As a result, a large number of the chopped materials C are laminated on the belt conveyor such that the fiber directions of the reinforcing fibers F contained in each of the chopped materials C (in other words, the longitudinal directions of the chopped materials C) vary in various directions on a horizontal plane, and the plurality of chopped materials C are stacked in the thickness direction.

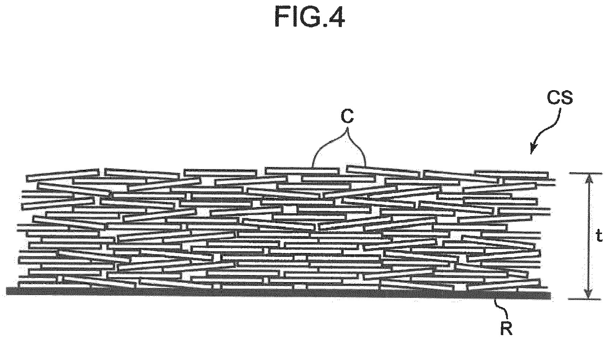

From the end side where a large number of the chopped materials C are laminated, the chopped materials C laminated on the upper surface of the belt conveyor are subjected to pressurizing and heating treatments using a heating roller with a heat-resistant endless belt or a release film sandwiched therebetween to integrate the large number of chopped materials C. That is, the laminated chopped materials C are bonded to each other by the pressurizing and heating treatments using the heating roller. In this manner, the dispersion and lamination of the large number of the chopped materials C on the upper surface of the belt conveyor and the pressurizing and heating treatments using the heating roller are continuously performed. The dropping operation of the chopped material C may be repeated at a plurality of places in the rotation direction of the belt conveyor as in an example of a producing method in the case of using a carrier sheet as described later, and as a result, the density of the chopped materials C and the number of the laminated chopped materials C may be increased. By such a method, as the laminated chopped sheet, a laminated chopped sheet in which the plurality of chopped materials C are integrated and laminated is continuously molded in a roll shape. The continuously molded shape is not illustrated, but a partial cross section of the wound laminated chopped sheet has a shape in which a carrier sheet R is omitted in FIG. 4 described later. The thickness of the laminated chopped sheet can be appropriately set.

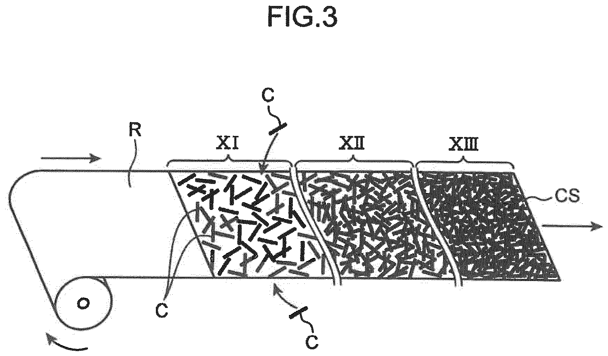

Alternatively, as another example of the method for producing a fiber-reinforced composite material, when a laminated chopped sheet is produced, a large number of chopped materials C may be laminated on a carrier sheet R made of a thermoplastic resin. Hereinafter, an example of a method for producing a fiber-reinforced composite material will be described with reference to FIGS. 3 and 4. FIGS. 3 and 4 represent a carrier sheet R, a section XI, a chopped material C, a section XII, a section XIII, a laminated chopped sheet (fiber-reinforced composite material) CS, and the thickness t of the laminated chopped sheet CS.

First, as shown in FIG. 3, while the carrier sheet R is fed in the longitudinal direction thereof, a large number of chopped materials C are arranged while being dispersed on the upper surface of the carrier sheet R. For the dispersion arrangement of the chopped material C, for example, the same dropping device as described above can be used from above the carrier sheet R. By repeating the dropping operation of the chopped material C using such a dropping device at a plurality of places in the feeding direction of the carrier sheet R, the density of the chopped material C on the carrier sheet R and the number of the laminated chopped materials C are increased. That is, in the plurality of sections XI, XII, XIII, ... in the longitudinal direction of the carrier sheet R, by repeatedly performing the dropping operation of the chopped material C using the dropping device, the large number of chopped materials C are laminated on the carrier sheet R such that the fiber directions of the reinforcing fibers F contained in each chopped material C vary in various directions on the horizontal plane and the plurality of chopped materials C are stacked in the thickness direction.

Next, the carrier sheet R and the chopped material C thereon are pressurized and heated using the heating roller to integrate the carrier sheet R and the chopped material C with each other. That is, by the pressurizing and heat treatments using the heating roller, the chopped materials C are supported on the carrier sheet R in a laminated state, and the stacked chopped materials C are bonded to each other. By such a method, as shown in FIG. 4, a laminated chopped sheet CS in which the plurality of chopped materials C are laminated on the upper surface of the carrier sheet R is molded. The thickness t of the laminated chopped sheet CS, that is, the total thickness of the carrier sheet R and the plurality or more of chopped materials C laminated thereon can be appropriately set.

As the material of the carrier sheet R, basically the same polyamide resin as the resin of the chopped material C, or the other thermoplastic resins as described above can be used.

In FIGS. 3 and 4, the case where the chopped materials C are laminated only on the upper surface of the carrier sheet R to produce the laminated chopped sheet CS has been exemplified, but it is of course possible to laminate the chopped materials C on both the surfaces of the carrier sheet R. In this case, the operation of laminating the chopped materials C on the carrier sheet R (that is, the operation of randomly arranging the chopped materials C in a multiple manner and performing the heating and pressurizing treatments) may be sequentially performed on the upper and lower surfaces of the carrier sheet R. That is, after the chopped materials C are laminated on the upper surface of the carrier sheet R, the carrier sheet R is turned over such that the lower surface of the carrier sheet R is placed above, and in this state, the operation of laminating the chopped materials C is similarly repeated. As a result, a laminated chopped sheet in which the chopped materials C are laminated on both the surfaces of the carrier sheet R can be produced.

### <Molded Resin Article>

A molded resin article in the present embodiment comprises the fiber-reinforced resin composite material in the above-described embodiment.

The molded resin article may be any molded article having any shape that can be produced using the fiber-reinforced resin composite material in the above-described embodiment by any molding method known to those skilled in the art. Examples thereof include molded products in general industrial applications, sporting applications, and aerospace applications and the like. Specific examples thereof include molded products used for various vehicles such as automobiles, bicycles, two-wheeled automobiles, and railway vehicles, and moving bodies such as ships. More specifically, examples thereof include molded products for various vehicles such as a brake pedal, an under cover, a front end, a seat shell, and a drive shaft, and other molded products such as a leaf spring, a windmill blade, a pressure vessel, a fly wheel, a papermaking roller, a roof member, a cable, a repair reinforcing material, a golf shaft, a fishing rod, a tennis or badminton racket, a hockey stick, and a ski pole.

The method for producing a molded resin article in the present embodiment is not particularly limited. As an example, first, a plurality of plate-shaped laminated chopped sheets CS described in the above-described embodiment and cut into a predetermined size are prepared, and arranged in a mold such as a heat press machine while being stacked in a thickness direction. Thereafter, the plurality of stacked chopped sheets CS are subjected to heating and/or pressurizing treatment and cooling treatment as necessary, whereby the molded resin article can be produced.

According to the production method as described above, the polyamide resin film R0 having low water absorbency is used as the thermoplastic resin, which make it possible to obtain a molded resin article in which a decrease in physical property value or a dimensional change of the molded resin article due to water absorption hardly occurs. Furthermore, the molded resin article is molded using the laminated chopped sheet CS containing a sufficient amount of the reinforcing fibers F such that the volume content rate Vf of the reinforcing fibers is 20% or more and 70% or less, whereby an excellent reinforcing effect due to the reinforcing fibers F can be obtained, and the strength of the molded resin article can be increased. Furthermore, the laminated chopped sheet CS in which the reinforcing fibers F of the plurality of chopped materials C are laminated in a state where the fiber directions of the reinforcing fibers F are two-dimensionally random (quasi-isotropic) can reduce the possibility that the reinforcing fibers F are chopped when the laminated chopped sheet CS is pressed, and can promote the flow of the resin during the pressing to increase the degree of freedom in the shape of the molded resin article. This makes it possible to mold molded resin articles having various shapes without any problem while isotropically exhibiting the reinforcing effect due to the reinforcing fibers F.

Although the outline of the present invention has been described above, the fiber-reinforced resin composite sheet and the like in the present embodiment is summarized as follows.

A fiber-reinforced resin composite sheet according to an aspect of the present invention comprises: a polyamide resin film containing a dicarboxylic acid component (a) and a diamine component (b); and a plurality of reinforcing fibers laminated in a state of being oriented in a same direction on the polyamide resin film, the reinforcing fibers being obtained by opening a reinforcing fiber bundle. The dicarboxylic acid component (a) contains 60 mol% or more and 100 mol% or less of terephthalic acid. The diamine component (b) contains 60 mol% or more and 100 mol% or less of 1,9-nonanediamine and 2-methyl-1,8 octanediamine. The fiber-reinforced resin composite sheet has a volume content rate Vf of the reinforcing fibers of 20% or more and 70% or less and a thickness of 20 µm or more and 70 µm or less.

The fiber-reinforced resin composite sheet having such a configuration has low water absorbency and excellent strength. In other words, the fiber-reinforced resin composite sheet not only has excellent strength but also has no change in physical properties such as strength due to a dimensional change caused by water absorption. Therefore, the fiber-reinforced resin composite sheet is suitably used as a material for producing, for example, a molded article that may be wetted with water or infiltrated into water, or a molded article to be used under a surrounding environment having rainwater or much moisture, or the like.

It is preferable that the polyamide resin film has a thickness of 5 µm or more and 50 µm or less, and the reinforcing fibers are laminated on one or both surfaces of the polyamide resin film.

Furthermore, the reinforcing fibers are more preferably carbon fibers.

A fiber-reinforced resin composite material according to another aspect of the present invention is a fiber-reinforced composite material obtained by laminating a plurality of fiber-reinforced resin composite sheets according to one aspect of the present invention described above in a thickness direction, wherein the fiber-reinforced composite material is laminated in a state where fiber directions of the reinforcing fibers of the plurality of fiber-reinforced resin composite sheets have an angular difference in a two-dimensional direction.

The fiber-reinforced resin composite material having such a configuration has low water absorbency and excellent strength.

Alternatively, a fiber-reinforced resin composite material according to another aspect of the present invention is a fiber-reinforced composite material obtained by laminating the fiber-reinforced resin composite sheets in shapes of a plurality of chopped materials in a thickness direction, wherein the chopped materials are formed such that the fiber-reinforced resin composite sheet has a rectangular shape with a short side length of 2 mm or more and 50 mm or less and a long side length of 2 mm or more and 80 mm or less; and the fiber-reinforced composite material is laminated in a state where fiber directions of the reinforcing fibers of the plurality of chopped materials are two-dimensionally random.

The fiber-reinforced resin composite material having such a configuration has low water absorbency and excellent strength.

Furthermore, in the fiber-reinforced resin composite material according to the above aspect, it is preferable that the fiber-reinforced resin composite material further comprises a carrier sheet, and the carrier sheet supports the plurality of chopped materials in a laminated state on one or both surfaces thereof.

A molded resin article according to still another aspect of the present invention contains the above-described fiber-reinforced resin composite material according to another aspect of the present invention.

The molded resin article having such a configuration has low water absorbency and excellent strength. In other words, the molded resin article not only has excellent strength but also has no change in physical properties such as strength due to a dimensional change caused by water absorption. Therefore, the molded resin article can be suitably used, for example, even under an environment where the molded resin article may be wetted with water or infiltrated into water, or a surrounding environment having rainwater or much moisture, or the like.

### Examples

Hereinafter, the present invention will be specifically described with reference to Examples, but the present invention is not limited thereto.

Fiber-reinforced resin composite material test pieces in Examples 1 and 2 and Comparative Examples 1 and 2 were produced as follows.

### <Example 1>

First, in order to produce a fiber-reinforced resin composite sheet, a polyamide resin film was produced. Pellets of polyamide 9T ("Genestar" (registered trademark) manufactured by Kuraray Co., Ltd.) were molded at a molding temperature of 290°C to 310°C using an extruder equipped with a T-die to obtain a polyamide resin film of polyamide 9T having a thickness of 20 µm.

Using the polyamide resin film and carbon fibers ("TORAYCA" manufactured by Toray Industries, Inc., grade: T-700 (PAN-based carbon fibers), fiber diameter: 7 µm, number of filaments: 12 K, fineness: 800 tex) as reinforcing fibers, the fiber-reinforced resin composite sheet in the present embodiment described above was obtained while a carbon fiber bundle was opened by a production device shown in FIG. 1. At this time, a roll temperature (the temperature of a heating roller 2 shown in FIG. 1) was set to 280°C, and a feeding speed was set to 20 m/min. The resulting fiber-reinforced resin composite sheet is obtained by laminating the opened carbon fiber bundle on both surfaces of the polyamide resin film. The volume content rate Vf of the carbon fibers in the fiber-reinforced resin composite sheet was similarly 53%, and the thickness of the fiber-reinforced resin composite sheet was 40 µm to 50 µm. In the present example, the volume content rate Vf of the reinforcing fibers was measured by a combustion method.

The forty-eight fiber-reinforced resin composite sheets obtained were laminated such that the opened carbon fibers were in a four-axis direction with an angular difference of 45°. The laminated fiber-reinforced resin composite sheets were put into a mold, pressurized under the conditions of 300°C and 2 MPa while being heated for 15 minutes, and then pressurized under the conditions of normal temperature and 3 MPa while being cooled for 10 minutes. A fiber-reinforced resin composite material of 300 mm × 300 mm × 2 mm (thickness) was taken out from the mold. The fiber-reinforced resin composite material was cut into predetermined various sizes. Finally, a fiber-reinforced resin composite material test piece having a four-axis direction laminated structure with an angular difference of 45° was obtained. The fiber-reinforced resin composite material test piece was cut into a size of 25 mm (length in a short axis direction) × 250 mm (length in a long axis direction) × 2 mm (thickness), a size of 15 mm (length in a short axis direction) × 100 mm (length in a long axis direction) × 2 mm (thickness), and a size of 50 mm × 50 mm × 2 mm (thickness). The volume content rate Vf of the carbon fibers of the test piece was also 53%.

### <Example 2>

A fiber-reinforced resin composite sheet obtained by the same method as in Example 1 was chopped by a method shown in FIG. 2 to produce a plurality of chopped materials having a rectangular shape with a short side length of 5 mm and a long side length of 20 mm. The thickness of the chopped material is 40 µm to 50 µm because it is the same as that of the fiber-reinforced resin composite sheet. The chopped materials were put and laminated in a mold such that the opened carbon fibers had a quasi-isotropic shape as shown in FIGS. 2 to 4, that is, the fiber directions of the carbon fibers of the chopped materials were two-dimensionally random (quasi-isotropic). The chopped materials laminated in the mold were pressurized while being heated for 15 minutes under the conditions of 300°C and 2 MPa, and then pressurized while being cooled for 10 minutes under the conditions of normal temperature and 3 MPa. A fiber-reinforced resin composite material of 300 mm × 300 mm × 2 mm (thickness) was taken out from the mold. The fiber-reinforced resin composite material was cut into predetermined various sizes. Finally, a fiber-reinforced resin composite material test piece having a quasi-isotropic laminated structure was obtained. The fiber-reinforced resin composite material test piece was cut into a size of 25 mm (length in a short axis direction) × 250 mm (length in a long axis direction) × 2 mm (thickness), a size of 15 mm (length in a short axis direction) × 100 mm (length in a long axis direction) × 2 mm (thickness), and a size of 50 mm × 50 mm × 2 mm (thickness). The volume content rate Vf of the carbon fibers of the test piece was 50%.

### <Comparative Example 1>

A polyamide resin film of polyamide 6 having a thickness of 20 µm was obtained in the same manner as in Example 1 except that polyamide 6 ("DIAMIRON" manufactured by Mitsubishi Chemical Corporation, grade: C-Z (melting point: Tm 225°C)) was used as a polyamide resin. Finally, fiber-reinforced resin composite material test pieces having a four-axis direction laminated structure with an angular difference of 45°, and having a size of 25 mm (length in a short axis direction) × 250 mm (length in a long axis direction) × 2 mm (thickness), a size of 15 mm (length in a short axis direction) × 100 mm (length in a long axis direction) × 2 mm (thickness), and a size of 50 mm × 50 mm × 2 mm (thickness) were obtained.

### <Comparative Example 2>

A polyamide resin film of polyamide 6 having a thickness of 20 µm was obtained in the same manner as in Example 1 except that polyamide 6 ("DIAMIRON" manufactured by Mitsubishi Chemical Corporation, grade: C-Z (melting point: Tm 225°C)) was used as a polyamide resin. Then, finally, fiber-reinforced resin composite material test pieces having a quasi-isotropic laminated structure and having a size of 25 mm (length in a short axis direction) × 250 mm (length in a long axis direction) × 2 mm (thickness), a size of 15 mm (length in a short axis direction) × 100 mm (length in a long axis direction) × 2 mm (thickness), and a size of 50 mm × 50 mm × 2 mm (thickness) were obtained in the same manner as in Example 2.

The tensile strength, tensile elastic modulus, flexural strength, and flexural elastic modulus of each of the cut fiber-reinforced resin composite material test pieces were measured by the following methods, and the water absorbability of each of the test pieces was evaluated by the following method.

### [Tensile Strength (MPa) and Tensile Elastic Modulus (GPa)]

The tensile strength and tensile elastic modulus of the fiber-reinforced resin composite material test pieces having a size of 25 mm (length in the short axis direction) × 250 mm (length in the long axis direction) × 2 mm (thickness) were measured. Specifically, the tensile strength and tensile elastic modulus of each of the fiber-reinforced resin composite material test pieces of Examples 1 and 2 and Comparative Examples 1 and 2 were measured in accordance with JIS K 7164: 2005.

### [Flexural Strength (MPa) and Flexural Elastic Modulus (GPa)]

The flexural strength and flexural elastic modulus of each of the fiber-reinforced resin composite material test pieces having a size of 15 mm (length in the short axis direction) × 100 mm (length in the long axis direction) × 2 mm (thickness) were measured. Specifically, the tensile strength and tensile elastic modulus of each of the fiber-reinforced resin composite material test pieces of Examples 1 and 2 and Comparative Examples 1 and 2 were measured in accordance with the flexural test method in 4-point bending (Method B) of carbon fiber-reinforced plastic in JIS K 7074: 1988.

### [Evaluation of Water Absorbency]

The water absorbency of the fiber-reinforced resin composite material test piece having a size of 50 mm × 50 mm × 2 mm (thickness) was evaluated. The fiber-reinforced resin composite material test piece was placed in an oven at 80°C for 6 hours to be in an absolute dry state. Subsequently, room temperature water was placed in a stainless steel tray of 210 mm × 297 mm up to a depth of about 10 mm, and the fiber-reinforced resin composite material test piece in an absolute dry state was immersed in the tray. At this time, the surrounding environment was an air atmosphere. At every lapse of a predetermined time, the fiber-reinforced resin composite material test piece was taken out from water, and the mass thereof was measured with an electronic balance. Two evaluation tests were performed for each of the fiber-reinforced resin composite material test pieces of Example 1 and Comparative Example 1, and an average mass (g), an average mass change amount from the absolute dry state (average mass over time - average mass in absolute dry state) (g), and an average mass change rate from the absolute dry state (average mass change amount/average mass in absolute dry state) (%) were calculated.

The measurement results in the fiber-reinforced resin composite material test pieces of Examples 1 and 2 and Comparative Examples 1 and 2, and the evaluation results of the water absorbency of the fiber-reinforced resin composite material test pieces of Example 1 and Comparative Example 1 are collectively shown in the following Tables 2 and 3.

**[Table 2]**

| | Example 1 | Comparative Example 1 | Example 2 | Comparative Example 2 |
|---|---|---|---|---|
| Type of polyamide resin | Polyamide 9T | Polyamide 6 | Polyamide 9T | Polyamide 6 |
| Laminated structure | Four-axis direction with angular difference of 45° | Four-axis direction with angular difference of 45° | Quasi-isotropic | Quasi-isotropic |
| Tensile strength (MPa) | 914.3 | 855.6 | 522.4 | 473.2 |
| Tensile elastic modulus (GPa) | 45.2 | 42.8 | 39.0 | 38.8 |
| Flexural strength (MPa) | 939.9 | 792.0 | 616.7 | 651.6 |
| Flexural elastic modulus (GPa) | 47.7 | 49.2 | 37.0 | 36.5 |

**[Table 3]**

| | | Under air atmosphere | | | | | | |
|---|---|---|---|---|---|---|---|---|
| | Elapsed time (h) | 0 (absolute dry state) | 1 | 24 | 48 | 96 | 120 | 149 |
| Example 1 (50 mm × 50 mm × 2 mm) | Average mass (g) | 7.355 | 7.36 | 7.36 | 7.36 | 7.36 | 7.365 | 7.365 |
| | Average mass change amount (g) | 0 | 0.005 | 0.005 | 0.005 | 0.005 | 0.01 | 0.01 |
| | Average mass change rate (%) | 0 | 0.068 | 0.068 | 0.068 | 0.068 | 0.136 | 0.136 |
| Comparative Example 1 (50 mm × 50 mm × 2 mm) | Average mass (g) | 7.615 | 7.62 | 7.665 | 7.665 | 7.67 | 7.685 | 7.69 |
| | Average mass change amount (g) | 0 | 0.005 | 0.05 | 0.05 | 0.055 | 0.07 | 0.075 |
| | Average mass change rate (%) | 0 | 0.066 | 0.657 | 0.657 | 0.722 | 0.919 | 0.985 |

As is apparent from the results in Table 2 above, the fiber-reinforced resin composite material test piece produced using the film of polyamide 9T has substantially excellent tensile properties and flexural properties and sufficiently excellent strength as compared with the case of using the film of polyamide 6. Furthermore, as is apparent from the results in Table 3 above, the fiber-reinforced resin composite material test piece produced using the film of polyamide 9T had remarkably low water absorbability as compared with the case of using the film of polyamide 6. The average mass change rate remained at 0.2% or less even when measured for 24 hours to 149 hours after the start of immersion, and almost no mass change occurred.

Furthermore, in order to more accurately evaluate the water absorbency of the fiber-reinforced resin composite material test piece, an additional test of the water absorbency under a constant temperature and constant humidity environment was performed. Thereafter, the test piece after the additional test was used, and evaluation tests of the tensile properties and flexural properties of the fiber-reinforced resin composite material test piece after water absorption were performed.

In the additional test of the water absorbency under the constant temperature and constant humidity environment, as the fiber-reinforced resin composite material test piece, a test piece having a size of 25 mm (length in a short axis direction) × 250 mm (length in a long axis direction) × 2 mm (thickness) was used. The test piece was produced and cut out by the same method as in Example 1 and Comparative Example 1 described above, and had a four-axis direction laminated structure with an angular difference of 45°.

### [Additional Test of Water Absorbency in Constant Temperature and Constant Humidity Environment]

Except that the fiber-reinforced resin composite material test piece used had a different size, and the surrounding environment when the fiber-reinforced resin composite material test piece was immersed was an environment of constant temperature and constant humidity at a temperature of 23°C and a humidity of 50% RH, the fiber-reinforced resin composite material test piece was taken out from water every predetermined time by the same method as in the water absorbency evaluation test described above, and the mass of the test piece was measured with an electronic balance. In this additional test, evaluation tests were performed for the six fiber-reinforced resin composite material test pieces of each of Example 1 and Comparative Example 1 in the size described above. An average mass (g), an average mass change amount (g) from an absolute dry state, and an average mass change rate from an absolute dry state (average mass change amount/average mass in absolute dry state) (%) were calculated in the same manner as described above.

The results of the additional test of water absorbency under a constant temperature and constant humidity environment are collectively shown in Table 4 below.

**[Table 4]**

| | | Under constant temperature and constant humidity environment (23°C, 50% RH) | | | | | | | | | | | | | | |
|---|---|---|---|---|---|---|---|---|---|---|---|---|---|---|---|---|
| | Elapsed time (h) | 0 (absolute dry state) | 24 | 48 | 72 | 96 | 168 | 216 | 264 | 336 | 384 | 432 | 672 | 720 | 768 | 864 |
| Example 1 (25 mm × 250 mm × 2 mm) | Average mass (g) | 20.83 | 20.84 | 20.85 | 20.85 | 20.85 | 20.86 | 20.86 | 20.86 | 20.87 | 20.87 | 20.87 | 20.88 | 20.88 | 20.88 | 20.88 |
| | Average mass change amount (g) | 0 | 0.01 | 0.02 | 0.02 | 0.02 | 0.03 | 0.03 | 0.03 | 0.04 | 0.04 | 0.04 | 0.05 | 0.05 | 0.05 | 0.05 |
| | Average mass change rate (%) | 0 | 0.06 | 0.09 | 0.09 | 0.11 | 0.14 | 0.16 | 0.18 | 0.19 | 0.2 | 0.2 | 0.26 | 0.27 | 0.26 | 0.26 |
| Comparative Example 1 (25 mm × 250 mm × 2 mm) | Average mass (g) | 21.29 | 21.38 | 21.42 | 21.45 | 21.48 | 21.53 | 21.57 | 21.60 | 21.63 | 21.65 | 21.67 | 21.76 | 21.77 | 21.78 | 21.80 |
| | Average mass change amount (g) | 0 | 0.09 | 0.13 | 0.16 | 0.19 | 0.24 | 0.28 | 0.31 | 0.34 | 0.36 | 0.38 | 0.47 | 0.48 | 0.49 | 0.51 |
| | Average mass change rate (%) | 0 | 0.45 | 0.65 | 0.76 | 0.9 | 1.16 | 1.31 | 1.45 | 1.61 | 1.71 | 1.79 | 2.24 | 2.26 | 2.29 | 2.42 |

As is apparent from the results in Table 4 above, the test piece in Example 1 produced using the film of polyamide 9T had an average mass change rate of 0.26% even after elapse of 864 hours after the start of immersion, and hardly caused a mass change even under a constant temperature and constant humidity environment. Meanwhile, the test piece in Comparative Example 1 produced using the film of polyamide 6 had an average mass change rate of 2.42% after 864 hours after the start of immersion, and a mass change occurred due to water absorption.

Subsequently, the test piece after the water absorption test under the constant temperature and constant humidity environment described above was used. Evaluation tests of tensile properties and flexural properties of the fiber-reinforced resin composite material test piece after water absorption were performed. Specifically, the test pieces of Example 1 and Comparative Example 1 after water absorption immersed in water for 864 hours under a constant temperature and constant humidity environment at 23°C and 50% RH were used as the test piece of Example 3 and the test piece of Comparative Example 3, and the tensile strength, tensile elastic modulus, flexural strength, and flexural elastic modulus of the test pieces were measured. The measurement method is the same as the method described above.

The measurement results of the tensile strength, tensile elastic modulus, flexural strength, and flexural elastic modulus of the fiber-reinforced resin composite material test pieces after water absorption in Example 3 and Comparative Example 3 are collectively shown in Table 5 below.

**[Table 5]**

| | Example 3 (test piece after water absorption (864 h) in Example 1) | Comparative Example 3 (test piece after water absorption (864 h) in Comparative Example 1) |
|---|---|---|
| Type of polyamide resin | Polyamide 9T | Polyamide 6 |
| Laminated structure | Four-axis direction with angular difference of 45° | Four-axis direction with angular difference of 45° |
| Tensile strength (MPa) | 932.6 | 762.8 |
| Tensile elastic modulus (GPa) | 44.2 | 37.9 |
| Flexural strength (MPa) | 955.2 | 424.5 |
| Flexural elastic modulus (GPa) | 42.0 | 35.7 |

As is apparent from the results in Table 5 above, the test piece of Example 3 produced using the film of polyamide 9T had remarkably excellent tensile properties and flexural properties as compared with the test piece of Comparative Example 3 produced using the film of polyamide 6. This is considered to be because in the test piece of Comparative Example 3 produced using the film of polyamide 6, a mass change occurs due to water absorption, and therefore physical property values such as strength decrease.

From these results, it was found that not only the fiber-reinforced resin composite sheet of the present invention example produced using the film of polyamide 9T has sufficient strength, but also physical properties such as strength of the fiber-reinforced resin composite sheet are not significantly deteriorated by water absorption, whereby the fiber-reinforced resin composite sheet is suitably used even under an environment where the fiber-reinforced resin composite sheet is wetted with water or immersed into water. Meanwhile, it was found that the degree of crystallinity of the fiber-reinforced resin composite sheet produced using the film of polyamide 6 is reduced by bonding between an amide group and water molecules under an environment where the fiber-reinforced resin composite sheet is wetted with water due to moisture and rainwater and the like, thereby causing a dimensional change (specifically, a mass change), and physical property values such as strength are significantly reduced as compared with the present invention example.

This application is based on Japanese Patent Application No. 2019-227455 filed on December 17, 2019, the contents of which are included in the present application.

The present invention has been appropriately and sufficiently explained above by way of the embodiments and Examples while referring to the specific examples described above, for the purpose of illustrating the present invention. A person skilled in the art should recognize, however, that the embodiments and examples described above can be easily modified and/or improved. Therefore, it is understood that any modified embodiments or improved embodiments conducted by a person skilled in the art are encompassed within the scope as claimed in the appended claims, so long as these modifications and improvements do not depart from the scope of the claims.

### Industrial Applicability

According to the present invention, the fiber-reinforced resin composite sheet having low water absorbency and excellent strength can be provided. Therefore, the fiber-reinforced resin composite sheet in the present invention can be suitably used for a wide range of products as a material for producing, for example, a molded resin article that may be wetted with water or infiltrated into water, or a molded resin article to be used under a surrounding environment having rainwater or much moisture, or the like.

## Claims

1. A fiber-reinforced resin composite sheet comprising:
a polyamide resin film containing a dicarboxylic acid component (a) and a diamine component (b); and
a plurality of reinforcing fibers laminated in a state of being oriented in a same direction on the polyamide resin film, the reinforcing fibers being obtained by opening a reinforcing fiber bundle,
wherein the dicarboxylic acid component (a) contains 60 mol% or more and 100 mol% or less of terephthalic acid;
the diamine component (b) contains 60 mol% or more and 100 mol% or less of 1,9-nonanediamine and 2-methyl-1,8 octanediamine; and
the fiber-reinforced resin composite sheet has a volume content rate Vf of the reinforcing fibers of 20% or more and 70% or less and a thickness of 20 µm or more and 70 µm or less.

2. The fiber-reinforced resin composite sheet according to claim 1, wherein
the polyamide resin film has a thickness of 5 µm or more and 50 µm or less; and
the reinforcing fibers are laminated on one or both surfaces of the polyamide resin film.

3. The fiber-reinforced resin composite sheet according to claim 1 or 2, wherein the reinforcing fibers are carbon fibers.

4. A fiber-reinforced resin composite material, which is a fiber-reinforced composite material obtained by laminating a plurality of fiber-reinforced resin composite sheets according to any one of claims 1 to 3 in a thickness direction,
wherein the fiber-reinforced composite material is laminated in a state where fiber directions of the reinforcing fibers of the plurality of fiber-reinforced resin composite sheets have an angular difference in a two-dimensional direction.

5. A fiber-reinforced resin composite material, which is a fiber-reinforced composite material obtained by laminating the fiber-reinforced resin composite sheets according to any one of claims 1 to 3 in shapes of a plurality of chopped materials in a thickness direction,
wherein the chopped materials are formed such that the fiber-reinforced resin composite sheets have a rectangular shape with a short side length of 2 mm or more and 50 mm or less and a long side length of 2 mm or more and 80 mm or less; and
the fiber-reinforced composite material is laminated in a state where fiber directions of the reinforcing fibers of the plurality of chopped materials are two-dimensionally random.

6. The fiber-reinforced resin composite material according to claim 5, wherein
the fiber-reinforced resin composite material further comprises a carrier sheet, and
the carrier sheet supports the plurality of chopped materials in a laminated state on one or both surfaces of the carrier sheet.

7. A molded resin article comprising the fiber-reinforced resin composite material according to any one of claims 4 to 6.
